# EUROPEAN PATENT SPECIFICATION

(11) **EP 3 960 444 B1**
(45) Date of publication and mention of the grant of the patent: **10.09.2025**
(21) Application number: 20795555.0
(22) Date of filing: 22.04.2020
(51) Int. Cl.: C09J 11/08, C09J 123/26, C09J 133/02, C09J 151/06, C09J 7/38, C08F 220/18

(54) **ADHESIVE AND ADHESIVE TAPE**
HAFTMITTEL UND HAFTBAND
ADHÉSIF ET RUBAN ADHÉSIF

(30) Priority: 26.04.2019 JP 2019086084; 20.04.2020 JP 2020074819
(43) Date of publication of application: 02.03.2022
(73) Proprietor: Nitto Denko Corporation, Ibaraki-shi, Osaka 567-8680 (JP)
(72) Inventor: KAWABE, Shigeki, Ibaraki-shi, Osaka 567-8680 (JP)
(74) Representative: Müller-Boré & Partner Patentanwälte PartG mbB
(86) International application number: PCT/JP2020/017368
(87) International publication number: WO 2020/218359

(56) References cited:
- WO-A1-2018/030050
- JP-A- 2002 338 934
- JP-A- 2004 182 896
- JP-A- 2014 008 694
- JP-A- 2018 111 808
- JP-A- 2019 001 860
- US-A- 5 318 843

## Description

### Technical Field

The present invention relates to a pressure-sensitive adhesive and a pressure-sensitive adhesive tape.

### Background Art

A pressure-sensitive adhesive tape or a double-sided tape has heretofore been used in applications, such as surface protection, insulation protection, and member joining or fixation, by being bonded to various members by virtue of its function. However, in the case of an application where such tape is brought into contact with a human hand, an oil content in, for example, a secrete, such as sebum or a finger mark, a chemical, such as a cosmetic, a hair dressing, a moisturizing cream, or a sunscreen, or food is liable to adhere to the tape through a fingertip. In addition, not only the oil content but also an alcohol component, such as ethanol, in, for example, a perfume, a sterilization sheet, or an alcohol for disinfection is a component that is liable to adhere to the tape in the case of an application where the tape is used under a living environment. In such usage form, when a component, such as the oil content or the alcohol component, is brought into contact with the pressure-sensitive adhesive layer of a pressure-sensitive adhesive sheet, the pressure-sensitive adhesive strength of the layer may reduce to cause an inconvenience, such as the floating or peeling thereof.

PTL 4 describes an adhesive composition containing a crystalline acid-modified polyolefin, the compositions have good pot life and chemical resistance.

### Citation List

### Patent Literature

[PTL 1] JP 2009-215355 A
[PTL 2] JP 2013-100485 A
[PTL 3] JP 2017-132911 A
[PTL 4] WO 2018/030050 A1

### Summary of Invention

### Technical Problem

The present invention has been made to solve the problems of the related art, and an object of the present invention is to provide a pressure-sensitive adhesive tape that is suppressed from being reduced in pressure-sensitive adhesive strength at the time of its contact with an oil content or an alcohol component.

### Solution to Problem

According to one embodiment of the present invention, there is provided a pressure-sensitive adhesive configured to express an adhesive property by being pressure-bonded, including: an acrylic polymer having an acid functional group; and a crystalline resin having a melting point of 25°C or more, wherein the acrylic polymer having an acid functional group has a constituent unit "a" derived from a (meth)acrylic acid alkyl ester having a linear or branched alkyl group having 4 or more carbon atoms, wherein the crystalline resin is a polyolefin-based resin, wherein the polyolefin-based resin is a maleic anhydride-modified polyolefin-based resin, a maleic acid-modified polyolefin-based resin, or an acrylic-modified polyolefin-based resin.

In one embodiment, the pressure-sensitive adhesive is configured to express the adhesive property by being warmed.

In one embodiment, a content ratio of the constituent unit "a" is 50 parts by weight or more with respect to 100 parts by weight of the acrylic polymer having an acid functional group.

In one embodiment, the pressure-sensitive adhesive further includes a C5-based petroleum resin and/or a C9-based petroleum resin.

According to another embodiment of the present invention, there is provided a pressure-sensitive adhesive tape. The pressure-sensitive adhesive tape includes the above-mentioned pressure-sensitive adhesive.

In one embodiment, the pressure-sensitive adhesive tape includes: a base material; and a pressure-sensitive adhesive layer arranged on at least one side of the base material, wherein the pressure-sensitive adhesive layer contains the pressure-sensitive adhesive.

In one embodiment, the base material is formed from at least one kind selected from polyacrylate, polyurethane, polyimide, aramid, polyamide, an ethylene-vinyl alcohol copolymer, polyetherimide, polyvinylidene fluoride, polyester, polypropylene, polyethylene, and polyphenylene sulfide.

In one embodiment, the pressure-sensitive adhesive tape further includes a peeling film arranged on a side of the pressure-sensitive adhesive layer opposite to the base material.

### Advantageous Effects of Invention

According to the present invention, the pressure-sensitive adhesive that is suppressed from being reduced in pressure-sensitive adhesive strength at the time of its contact with an oil content or an alcohol component, and the pressure-sensitive adhesive tape including the pressure-sensitive adhesive can be provided. In addition, the pressure-sensitive adhesive of the present invention shows excellent adhesive properties to both of a metallic adherend and a nonmetallic adherend. Further, the pressure-sensitive adhesive of the present invention is excellent in heat resistance and chemical resistance, and can exhibit excellent adhesive properties and excellent joining properties in various applications.

### Brief Description of Drawings

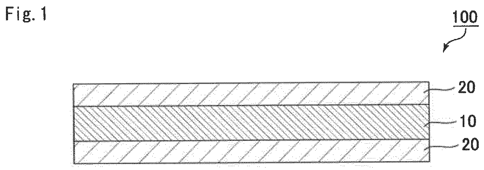

FIG. 1 is a schematic sectional view of a pressure-sensitive adhesive tape according to one embodiment of the present invention.

### Description of Embodiments

### A. Pressure-sensitive Adhesive

A pressure-sensitive adhesive of the present invention is a pressure-sensitive adhesive configured to express an adhesive property by being pressure-bonded, and includes an acrylic polymer having an acid functional group and a crystalline resin having a melting point of 25°C or more. In the present invention, combined use of the acrylic polymer having an acid functional group and the crystalline resin can provide a pressure-sensitive adhesive, which is excellent in heat resistance and chemical resistance, and is suppressed from being reduced in pressure-sensitive adhesive strength at the time of its contact with an oil content or an alcohol component. In addition, when the pressure-sensitive adhesive of the present invention is used in a double-sided pressure-sensitive adhesive tape, the tape may be suitably used in the joining of a metal material and another metal material, the joining of a nonmetal material and another nonmetal material, and the joining of a metal material and a nonmetal material.

The pressure-sensitive adhesive may be a pressure-sensitive adhesive configured to express an adhesive property under normal temperature (25°C), or may be a pressure-sensitive adhesive configured to express an adhesive property by being warmed (at, for example, from 100°C to 200°C). The pressure-sensitive adhesive configured to express the adhesive property by being warmed may express the adhesive property under the state of being cooled to normal temperature after the warming.

### A-1. Acrylic Polymer having Acid Functional Group

An example of the acrylic polymer having an acid functional group is an acrylic polymer including one or two or more kinds of constituent units each derived from a (meth)acrylic acid alkyl ester, and a constituent unit derived from a monomer having the acid functional group.

The content ratio of the acrylic polymer having an acid functional group in the pressure-sensitive adhesive is preferably from 7 parts by weight to 95 parts by weight, more preferably from 15 parts by weight to 90 parts by weight, still more preferably from 20 parts by weight to 85 parts by weight, particularly preferably from 40 parts by weight to 85 parts by weight with respect to 100 parts by weight of a solid content in the pressure-sensitive adhesive. The content of the acrylic polymer having an acid functional group may be set to any appropriate amount in accordance with, for example, a desired adhesive property. The pressure-sensitive adhesive may include an acrylic polymer free of any acid functional group in addition to the acrylic polymer having an acid functional group, or may be free of the acrylic polymer free of any acid functional group.

The content ratio of the constituent unit derived from the (meth)acrylic acid alkyl ester is preferably from 50 parts by weight to 99 parts by weight, more preferably from 70 parts by weight to 98 parts by weight, still more preferably from 80 parts by weight to 98 parts by weight with respect to 100 parts by weight of the acrylic polymer having an acid functional group.

The (meth)acrylic acid alkyl ester preferably has a linear or branched alkyl group having 1 to 24 (more preferably 3 to 20, still more preferably 4 to 12, particularly preferably 4 to 8) carbon atoms.

Examples of the (meth)acrylic acid alkyl ester include methyl (meth)acrylate, ethyl (meth)acrylate, propyl (meth)acrylate, butyl (meth)acrylate, pentyl (meth)acrylate, hexyl (meth)acrylate, heptyl (meth)acrylate, octyl (meth)acrylate, nonyl (meth)acrylate, decyl (meth)acrylate, and eicosyl (meth)acrylate.

According to the invention, the acrylic polymer having an acid functional group has a constituent unit "a" derived from a (meth)acrylic acid alkyl ester having a linear or branched alkyl group having 4 or more (preferably 4 to 12, more preferably 4 to 8) carbon atoms, and the content ratio of the constituent unit "a" is 50 parts by weight or more (preferably from 50 parts by weight to 99 parts by weight, more preferably from 70 parts by weight to 98 parts by weight, still more preferably from 80 parts by weight to 98 parts by weight) with respect to 100 parts by weight of the acrylic polymer having an acid functional group. The use of the acrylic polymer having an acid functional group, the polymer containing a predetermined amount or more of the constituent unit "a", can provide a pressure-sensitive adhesive, which is excellent in heat resistance and chemical resistance, and is suppressed from being reduced in pressure-sensitive adhesive strength at the time of its contact with an oil content or an alcohol component.

In one embodiment, a (meth)acrylic acid alkyl ester having a branched alkyl group is used as the (meth)acrylic acid alkyl ester. The use of the (meth)acrylic acid alkyl ester having a branched alkyl group can provide a pressure-sensitive adhesive tape excellent in chemical resistance. The number of carbon atoms of the branched alkyl group is preferably 4 or more, more preferably from 4 to 12, still more preferably from 4 to 8. The (meth)acrylic acid alkyl ester having a linear alkyl group and the (meth)acrylic acid alkyl ester having a branched alkyl group may also be used in combination. In addition, the (meth)acrylic acid alkyl ester having a branched alkyl group may be used alone as the (meth)acrylic acid alkyl ester.

In one embodiment, the content ratio of a constituent unit derived from the (meth)acrylic acid alkyl ester having a branched alkyl group in the acrylic polymer having an acid functional group is preferably from 50 parts by weight to 100 parts by weight, more preferably from 70 parts by weight to 100 parts by weight, still more preferably from 80 parts by weight to 100 parts by weight with respect to 100 parts by weight of the constituent unit derived from the (meth)acrylic acid alkyl ester (i.e., 100 parts by weight of the total amount of the (meth)acrylic acid alkyl ester having a linear alkyl group and the (meth) acrylic acid alkyl ester having a branched alkyl group).

Examples of the (meth)acrylic acid alkyl ester having a branched alkyl group include isobutyl (meth)acrylate, sec-butyl (meth)acrylate, t-butyl (meth)acrylate, 2-ethylhexyl (meth)acrylate, isooctyl (meth)acrylate, isononyl (meth)acrylate, isodecyl (meth)acrylate, 2-ethylbutyl (meth)acrylate, and 2-methylbutyl (meth)acrylate. Of those, 2-ethylhexyl (meth)acrylate is more preferred. Of those, 2-ethylhexyl (meth)acrylate, isooctyl (meth)acrylate, isononyl (meth)acrylate, or isodecyl (meth)acrylate is preferred, and 2-ethylhexyl (meth)acrylate is more preferred. The use of 2-ethylhexyl (meth)acrylate can provide a pressure-sensitive adhesive that is suppressed from being reduced in pressure-sensitive adhesive strength at the time of its contact with an oil content or an alcohol component.

Examples of the acid functional group of the acrylic polymer having an acid functional group include a carboxyl group, an acid anhydride group, a phosphoric acid group, and a sulfonic acid group. Accordingly, examples of the monomer having an acid functional group include a carboxyl group-containing monomer, an acid anhydride group-containing monomer, a phosphoric acid group-containing monomer, and a sulfonic acid group-containing monomer. Of those, a carboxyl group-containing monomer is preferred. The use of the carboxyl group-containing monomer provides the following features: the pressure-sensitive adhesive can easily express an adhesive strength to a metal plate; and in terms of design and production, the monomer can be easily copolymerized with any other acrylic monomer, and a polymer obtained by the copolymerization can be easily cross-linked.

Examples of the carboxyl group-containing monomer include (meth)acrylic acid, carboxyethyl acrylate, carboxypentyl acrylate, itaconic acid, maleic acid, fumaric acid, and crotonic acid. Of those, acrylic acid is preferred.

The content ratio of the constituent unit derived from the monomer having an acid functional group is preferably from 1.5 parts by weight to 20 parts by weight, more preferably from 1.8 parts by weight to 15 parts by weight, still more preferably from 2 parts by weight to 10 parts by weight with respect to 100 parts by weight of the acrylic polymer having an acid functional group.

The acrylic polymer having an acid functional group may have a constituent unit derived from any other monomer copolymerizable with the (meth)acrylic acid alkyl ester and/or the monomer having the acid functional group, as required, for the purpose of modification of cohesive strength, heat resistance and cross-linkability. Examples of such other monomer include: hydroxyl group-containing monomers, such as hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth) acrylate, and (4-hydroxymethylcyclohexyl)methyl methacrylate; (N-substituted) amide-based monomers, such as (meth)acrylamide, N,N-dimethyl(meth)acrylamide, N-butyl (meth)acrylamide, N-methylol (meth)acrylamide, and N-methylolpropane (meth)acrylamide; aminoalkyl (meth)acrylate-based monomers, such as aminoethyl (meth)acrylate, N,N-dimethylaminoethyl (meth)acrylate, and t-butylaminoethyl (meth)acrylate; alkoxyalkyl (meth)acrylate-based monomers, such as methoxyethyl (meth)acrylate and ethoxyethyl (meth)acrylate; maleimide-based monomers, such as N-cyclohexylmaleimide, N-isopropylmaleimide, N-laurylmaleimide, and N-phenylmaleimide; itaconimide-based monomers, such as N-methyl itaconimide, N-ethyl itaconimide, N-butyl itaconimide, N-octyl itaconimide, N-2-ethylhexyl itaconimide, N-cyclohexyl itaconimide, and N-lauryl itaconimide; succinimide-based monomers, such as N-(meth)acryloyloxymethylene succinimide, N-(meth)acryloyl-6-oxyhexamethylene succinimide, and N-(meth)acryloyl-8-oxyoctamethylene succinimide; vinyl-based monomers, such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, and N-vinylcaprolactam; cyanoacrylate monomers, such as acrylonitrile and methacrylonitrile; epoxy group-containing acrylic monomers, such as glycidyl (meth)acrylate; glycol-based acrylic ester monomers, such as polyethylene glycol (meth)acrylate, polypropylene glycol (meth)acrylate, methoxyethylene glycol (meth)acrylate, and methoxypolypropylene glycol (meth)acrylate; acrylic ester-based monomers each having, for example, a heterocycle, a halogen atom, or a silicon atom, such as tetrahydrofurfuryl (meth)acrylate, fluorine (meth)acrylate, and silicone (meth)acrylate; polyfunctional monomers, such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, and urethane acrylate; olefin-based monomers, such as isoprene, butadiene, and isobutylene; and vinyl ether-based monomers, such as vinyl ether. Those monomer components may be used alone or in combination thereof.

The content ratio of the constituent unit derived from the other monomer is preferably 20 parts by weight or less, more preferably 10 parts by weight or less, still more preferably 5 parts by weight or less with respect to 100 parts by weight of the acrylic polymer having an acid functional group.

The weight-average molecular weight of the acrylic polymer having an acid functional group is preferably from 300,000 to 2,000,000, more preferably from 500,000 to 1,500,000. The weight-average molecular weight may be measured by GPC (solvent: THF).

### A-2. Crystalline Resin

As described above, the pressure-sensitive adhesive of the present invention includes the crystalline resin. The crystalline resin refers to a resin having a clear endothermic peak (whose half-width is 15°C or less) in a differential calorie curve measured with a differential scanning calorimeter (DSC).

The content ratio of the crystalline resin in the pressure-sensitive adhesive is preferably from 3 parts by weight to 90 parts by weight, more preferably from 10 parts by weight to 85 parts by weight, still more preferably from 15 parts by weight to 80 parts by weight with respect to 100 parts by weight of the solid content in the pressure-sensitive adhesive.

The melting point of the crystalline resin is 25°C or more, more preferably 40°C or more, still more preferably from 60°C to 120°C, particularly preferably from 60°C to 100°C. When the melting point falls within such ranges, a pressure-sensitive adhesive reduced in stickiness can be obtained. The melting point may be measured by differential scanning calorimetry (DSC).

The weight-average molecular weight of the crystalline resin is preferably from 50,000 to 1,500,000, more preferably from 70,000 to 1,000,000.

The crystallinity of the crystalline resin is preferably 10% or more, more preferably 20% or more. The crystallinity may be typically measured by differential scanning calorimetry (DSC).

In one embodiment, the crystalline resin is a polyolefin-based resin. Examples of the polyolefin-based resin include: an ethylene homopolymer; ethylene-α-olefin copolymers, such as an ethylene-propylene copolymer, an ethylene-1-butene copolymer, an ethylene-1-hexene copolymer, an ethylene-1-octene copolymer, an ethylene-1-heptene copolymer, an ethylene-1-octene copolymer, an ethylene-1-nonene copolymer, an ethylene-1-decene copolymer, an ethylene-1-undecene copolymer, an ethylene-1-dodecene copolymer, an ethylene-1-tridecene copolymer, an ethylene-1-tetradecene copolymer, an ethylene-1-pentadecene copolymer, an ethylene-1-hexadecene copolymer, an ethylene-1-heptadecene copolymer, an ethylene-1-octadecene copolymer, an ethylene-1-nanodecene copolymer, and an ethylene-1-eicosene copolymer; ethylene-vinyl ester copolymers, such as an ethylene-vinyl acetate copolymer and an ethylene-vinyl propionate copolymer; ethylene-unsaturated carboxylic acid alkyl ester copolymers, such as an ethylene-methyl methacrylate copolymer, an ethylene-methyl acrylate copolymer, an ethylene-ethyl acrylate copolymer, and an ethylene-butyl acrylate copolymer; and a propylene-based resin.

In one embodiment, a crystalline polypropylene-based resin is used as the crystalline resin. The crystalline polypropylene-based resin may be a homopolymer, or may be a copolymer obtained from propylene and a monomer copolymerizable with propylene. Examples of the monomer copolymerizable with propylene include α-olefins, such as ethylene, 1-butene, 1-pentene, 1-hexene, 1-octene, 1-decene, 4-methyl-1-pentene, and 3-methyl-1-pentene. The content ratio of a constituent unit derived from propylene in the crystalline polypropylene-based resin is preferably from 60 mol% to 99 mol%, more preferably from 65 mol% to 99 mol%, still more preferably from 70 mol% to 99 mol%. The content ratio of a constituent unit derived from the α-olefin in the crystalline polypropylene-based resin is preferably from 1 mol% to 15 mol%, more preferably from 1 mol% to 10 mol%.

According to the invention, a modified polyolefin-based resin is used as the crystalline resin. The use of the modified polyolefin-based resin can provide a pressure-sensitive adhesive capable of forming a pressure-sensitive adhesive layer, which is suppressed from causing a phase separation between the crystalline resin and the acrylic polymer having an acid functional group, is reduced in bleeding, and is excellent in transparency. A maleic anhydride-modified polyolefin-based resin, a maleic acid-modified polyolefin-based resin, an acrylic-modified polyolefin-based resin are used as the modified polyolefin-based resin. A specific example thereof is a resin obtained by modifying the polyolefin-based resin with maleic anhydride, maleic acid, or acrylic. Of those, a maleic anhydride-modified polyolefin-based resin is preferred, and a maleic anhydride-modified propylene-based resin is more preferred. A specific example of the maleic anhydride-modified propylene-based resin is a resin obtained by modifying the crystalline polypropylene-based resin with maleic anhydride. The modification ratio of the modified polyolefin-based resin is preferably from 1 wt% to 5 wt%, more preferably from 1.5 wt% to 2 wt%.

### A-3. Additive

The pressure-sensitive adhesive may include any appropriate additive as required. Examples of the additive include a cross-linking agent, a tackifier, a plasticizer (e.g., a trimellitic acid ester-based plasticizer or a pyromellitic acid ester-based plasticizer), a pigment, a dye, a filler, an age resistor, a conductive material, a UV absorber, a light stabilizer, a release modifier, a softener, a surfactant, a flame retardant, an antioxidant, and a solvent. In addition, the pressure-sensitive adhesive may include any appropriate solvent.

Any appropriate tackifier is used as the tackifier. For example, a tackifying resin is used as the tackifier. Specific examples of the tackifying resin include rosin-based tackifying resins (such as an unmodified rosin, a modified rosin, a rosin phenol-based resin, and a rosin ester-based resin), terpene-based tackifying resins (such as a terpene-based resin, a terpene phenol-based resin, a styrene-modified terpene-based resin, an aromatic modified terpene-based resin, and a hydrogenated terpene-based resin), hydrocarbon-based tackifying resins (such as an aliphatic hydrocarbon resin, an alicyclic hydrocarbon resin, an aromatic hydrocarbon resin (e.g., a styrene-based resin or a xylene-based resin), an aliphatic/aromatic petroleum resin, an aliphatic/alicyclic petroleum resin, a hydrogenated hydrocarbon resin, a coumarone-based resin, and a coumarone indene-based resin), phenol-based tackifying resins (such as an alkylphenol-based resin, a xylene formaldehyde-based resin, resol, and novolac), ketone-based tackifying resins, polyamide-based tackifying resins, epoxy-based tackifying resins, and elastomer-based tackifying resins.

In one embodiment, the pressure-sensitive adhesive uses a C5-based petroleum resin and/or a C9-based petroleum resin as the tackifier. The use of such tackifier can impart, to the pressure-sensitive adhesive, satisfactory adhesiveness to a nonpolar adherend, such as polypropylene.

The softening point of the tackifier is preferably from 70°C to 200°C, more preferably from 80°C to 190°C. When the softening point falls within such ranges, a pressure-sensitive adhesive layer whose storage modulus of elasticity and loss modulus of elasticity are appropriately adjusted can be obtained.

The content ratio of the tackifier is preferably from 5 parts by weight to 50 parts by weight, more preferably from 10 parts by weight to 40 parts by weight with respect to 100 parts by weight of the total amount of the acrylic polymer having an acid functional group and the crystalline resin having a melting point of 25°C or more.

Examples of the cross-linking agent include an isocyanate-based cross-linking agent, an epoxy-based cross-linking agent, a melamine-based cross-linking agent, a peroxide-based cross-linking agent, a urea-based cross-linking agent, a metal alkoxide-based cross-linking agent, a metal chelate-based cross-linking agent, a metal salt-based cross-linking agent, a carbodiimide-based cross-linking agent, an oxazoline-based cross-linking agent, an aziridine-based cross-linking agent, and an amine-based cross-linking agent. Of those, an isocyanate-based cross-linking agent, an epoxy-based cross-linking agent, or a metal chelate-based cross-linking agent is preferred.

Specific examples of the isocyanate-based cross-linking agent include: lower aliphatic polyisocyanates, such as butylene diisocyanate and hexamethylene diisocyanate; alicyclic isocyanates, such as cyclopentylene diisocyanate, cyclohexylene diisocyanate, and isophorone diisocyanate; aromatic isocyanates, such as 2,4-tolylene diisocyanate, 4,4'-diphenylmethane diisocyanate, and xylylene diisocyanate; and isocyanate adducts, such as a trimethylolpropane/tolylene diisocyanate trimer adduct (manufactured by Nippon Polyurethane Industry Co., Ltd., product name: "Coronate L"), a trimethylolpropane/hexamethylene diisocyanate trimer adduct (manufactured by Nippon Polyurethane Industry Co., Ltd., product name: "Coronate HL"), and an isocyanurate form of hexamethylene diisocyanate (manufactured by Nippon Polyurethane Industry Co., Ltd., product name: "Coronate HX"). The content of the isocyanate-based cross-linking agent may be set to any appropriate amount in accordance with a desired pressure-sensitive adhesive strength and a desired modulus of elasticity, and is typically from 0.1 part by weight to 20 parts by weight, more preferably from 0.5 part by weight to 10 parts by weight with respect to 100 parts by weight of the total amount of the acrylic polymer having an acid functional group and the crystalline resin having a melting point of 25°C or more.

Examples of the epoxy-based cross-linking agent include N,N,N',N'-tetraglycidyl-m-xylenediamine, diglycidylaniline, 1,3-bis(N,N-glycidylaminomethyl)cyclohexane (manufactured by Mitsubishi Gas Chemical Company, Inc., product name: "TETRAD-C"), 1,6-hexanediol diglycidyl ether (manufactured by Kyoeisha Chemical Co., Ltd., product name: "Epolite 1600"), neopentyl glycol diglycidyl ether (manufactured by Kyoeisha Chemical Co., Ltd., product name: "Epolite 1500NP"), ethylene glycol diglycidyl ether (manufactured by Kyoeisha Chemical Co., Ltd., product name: "Epolite 40E"), propylene glycol diglycidyl ether (manufactured by Kyoeisha Chemical Co., Ltd., product name: "Epolite 70P"), polyethylene glycol diglycidyl ether (manufactured by NOF Corporation, product name: "EPIOL E-400"), polypropylene glycol diglycidyl ether (manufactured by NOF Corporation, product name: "EPIOL P-200"), sorbitol polyglycidyl ether (manufactured by Nagase ChemteX Corporation, product name: "Denacol EX-611"), glycerol polyglycidyl ether (manufactured by Nagase ChemteX Corporation, product name: "Denacol EX-314"), pentaerythritol polyglycidyl ether, polyglycerol polyglycidyl ether (manufactured by Nagase ChemteX Corporation, product name: "Denacol EX-512"), sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcin diglycidyl ether, bisphenol-S-diglycidyl ether, and an epoxy-based resin having two or more epoxy groups in a molecule thereof. The content of the epoxy-based cross-linking agent may be set to any appropriate amount in accordance with a desired pressure-sensitive adhesive strength and a desired modulus of elasticity, and is typically from 0.01 part by weight to 10 parts by weight, more preferably from 0.03 part by weight to 5 parts by weight with respect to 100 parts by weight of the total amount of the acrylic polymer having an acid functional group and the crystalline resin having a melting point of 25°C or more.

A metal chelate compound whose metal atom is, for example, aluminum, zirconium, titanium, zinc, iron, or tin may be used as the metal chelate-based cross-linking agent. Of those, an aluminum chelate compound or a titanium chelate compound is preferred.

Examples of the aluminum chelate compound include diisopropoxyaluminum monooleyl acetoacetate, monoisopropoxyaluminum bisoleyl acetoacetate, monoisopropoxyaluminum monooleate monoethyl acetoacetate, diisopropoxyaluminum monolauryl acetoacetate, diisopropoxyaluminum monostearyl acetoacetate, diisopropoxyaluminum monoisostearyl acetoacetate, monoisopropoxyaluminum mono-N-lauroyl-β-alanate monolauryl acetoacetate, aluminum tris(acetylacetonate), acetylacetonatoaluminum bis(ethyl acetoacetate), monoacetylacetonatoaluminum bis(isobutyl acetoacetate) chelate, monoacetylacetonatoaluminum bis(2-ethylhexyl acetoacetate) chelate, monoacetylacetonatoaluminum bis(dodecyl acetoacetate) chelate, and monoacetylacetonatoaluminum bis(oleyl acetoacetate) chelate.

Examples of the titanium chelate compound include titanium diisopropoxy bis (acetylacetonate), titanium tetra-n-butyrate, titanium tetra-2-ethylhexanonate, titanium tetraacetylacetonate, titanium diisopropoxy bis(ethyl acetoacetate), and titanium octylene glycolate.

Examples of the other metal chelate compounds include zirconium tetraacetylacetonate and zirconium tributoxy monoacetylacetonate.

The above-mentioned metal chelate-based cross-linking agents may be used alone or in combination thereof.

The content of the metal chelate-based cross-linking agent may be set to any appropriate amount in accordance with a desired pressure-sensitive adhesive strength and a desired modulus of elasticity, and is typically from 0.01 part by weight to 10 parts by weight, more preferably from 0.03 part by weight to 7 parts by weight, still more preferably from 0.05 part by weight to 5 parts by weight with respect to 100 parts by weight of the total amount of the acrylic polymer having an acid functional group and the crystalline resin having a melting point of 25°C or more.

### B. Pressure-sensitive Adhesive Tape

FIG. 1 is a schematic sectional view of a pressure-sensitive adhesive tape according to one embodiment of the present invention. A pressure-sensitive adhesive tape **100** includes a base material 10 and a pressure-sensitive adhesive layer **20** arranged on at least one side (both sides in the illustrated example) of the base material **10.** The pressure-sensitive adhesive layer **20** contains the pressure-sensitive adhesive described in the section A. In the pressure-sensitive adhesive tape, a peeling film may be arranged outside the pressure-sensitive adhesive layer (i.e., on the surface of the pressure-sensitive adhesive layer opposite to the base material) for the purpose of protecting the pressure-sensitive adhesive surface of the tape until the tape is brought into use, though the film is not shown.

The pressure-sensitive adhesive tape may be a pressure-sensitive adhesive tape configured to express an adhesive property under normal temperature (25°C), or may be a pressure-sensitive adhesive tape configured to express an adhesive property by being warmed. The pressure-sensitive adhesive tape configured to express the adhesive property by being warmed may express the adhesive property under the state of being cooled to normal temperature after the warming.

The pressure-sensitive adhesive strength of the pressure-sensitive adhesive layer of the pressure-sensitive adhesive tape of the present invention at 25°C at the time of its bonding to an aluminum plate is preferably 0.5 N/10 mm or more, more preferably from 0.8 N/10 mm to 20 N/10 mm, still more preferably from 1 N/10 mm to 10 N/10 mm. Herein, the pressure-sensitive adhesive strength is a pressure-sensitive adhesive strength measured by a method in conformity with JIS Z 0237:2000, and is measured by: bonding the pressure-sensitive adhesive tape to an adherend by one pass back and forth with a 2 kg roller; leaving the resultant to stand under 25°C for 30 minutes; and then peeling the pressure-sensitive adhesive tape under the conditions of a peel angle of 180° and a peel rate (tensile rate) of 300 mm/min. When the pressure-sensitive adhesive tape is a pressure-sensitive adhesive tape configured to express an adhesive property by being warmed, a pressure-sensitive adhesive strength measured after the following procedure corresponds to the above-mentioned pressure-sensitive adhesive strength: the pressure-sensitive adhesive tape and the adherend are bonded to each other by a bonding operation under the temperature at which the pressure-sensitive adhesive tape expresses the adhesive property (e.g., 130°C, 0.4 MPa, and 5 minutes), and the resultant is cooled to 25°C.

The pressure-sensitive adhesive strength of the pressure-sensitive adhesive layer of the pressure-sensitive adhesive tape of the present invention at 25°C at the time of its bonding to an aluminum plate is preferably 0.3 N/10 mm or more, more preferably from 0.5 N/10 mm to 20 N/10 mm, still more preferably from 1 N/10 mm to 10 N/10 mm.

The thickness of the pressure-sensitive adhesive tape is preferably from 5 µm to 200 µm, more preferably from 15 µm to 150 µm, still more preferably from 30 µm to 100 µm.

### B-1. Pressure-sensitive Adhesive Layer

The pressure-sensitive adhesive layer contains the pressure-sensitive adhesive described in the section A.

The thickness of the pressure-sensitive adhesive layer is preferably from 1 µm to 100 µm, more preferably from 3 µm to 800 µm, still more preferably from 5 µm to 50 µm.

The probe tack value of the pressure-sensitive adhesive layer at 25°C is preferably 500 g or less, more preferably 400 g or less, still more preferably 340 g or less, particularly preferably from 10 g to 300 g. A method of measuring the probe tack value is described later.

### B-2. Base Material

A resin film is preferably used as the base material. Examples of the resin for forming the resin film include polyacrylate, polyurethane, polyimide, aramid, polyamide, an ethylene-vinyl alcohol copolymer, polyetherimide, polyvinylidene fluoride, polyester, polypropylene, polyethylene, and polyphenylene sulfide. Those resins may be used alone or in combination thereof.

The thickness of the base material is preferably from 1 µm to 100 µm, more preferably from 5 µm to 70 µm, still more preferably from 15 µm to 50 µm.

### Examples

Now, the present invention is specifically described by way of Examples. However, the present invention is by no means limited to these Examples. In addition, the terms "part(s)" and "%" in Examples are by weight unless otherwise stated.

### <<Single-sided Pressure-sensitive Adhesive Tape>>

### [Example 1]

A four-necked flask including a stirring blade, a temperature gauge, a nitrogen gas inlet tube, and a condenser was loaded with a mixture of 2-ethylhexyl acrylate and acrylic acid (95 parts by weight/5 parts by weight), 0.2 part by weight of benzoyl peroxide serving as an initiator, and 120 parts by weight of ethyl acetate, and a nitrogen gas was introduced into the flask while the contents were gently stirred. While the temperature of the liquid in the flask was kept at around 60°C, a polymerization reaction was performed for about 6 hours to provide an acrylic copolymer (1) having a weight-average molecular weight of 1,300,000.

25 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin and 2 parts by weight of an isocyanate-based cross-linking agent (manufactured by Tosoh Corporation, product name: "Coronate L") were added to 75 parts by weight of the acrylic copolymer (1), and the mixture was diluted with toluene to prepare a pressure-sensitive adhesive (1) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 10 µm. Thus, a pressure-sensitive adhesive tape (1) was obtained.

### [Example 2]

The acrylic copolymer (1) was obtained in the same manner as in Example 1.

25 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin, 30 parts by weight of a hydrogenated derivative of a C9-based petroleum resin (manufactured by Arakawa Chemical Industries, Ltd., product name: "ARKON P-125," hydrogenation ratio: 95%, softening point: 125°C), and 2 parts by weight of an isocyanate-based cross-linking agent (manufactured by Tosoh Corporation, product name: "Coronate L") were added to 75 parts by weight of the acrylic copolymer (1), and the mixture was diluted with toluene to prepare a pressure-sensitive adhesive (2) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 10 µm. Thus, a pressure-sensitive adhesive tape (2) was obtained.

### [Example 3]

The acrylic copolymer (1) was obtained in the same manner as in Example 1.

25 Parts by weight of a maleic anhydride-modified propylene-butene copolymer resin (manufactured by Toyobo Co., Ltd., product name: "TOYO-TAC PMA-T," weight-average molecular weight: 75,000, melting point: 90°C) serving as a modified olefin resin and 2 parts by weight of an isocyanate-based cross-linking agent (manufactured by Tosoh Corporation, product name: "Coronate L") were added to 75 parts by weight of the acrylic copolymer (1), and the mixture was diluted with toluene to prepare a pressure-sensitive adhesive (3) having a solid content of 15%.

The resultant pressure-sensitive adhesive was applied onto a base material (polypropylene film, manufactured by Toray Industries, Inc., product name: "TORAYFAN," thickness: 12 µm) so that the thickness of a pressure-sensitive adhesive layer after drying became 20 µm. Thus, a pressure-sensitive adhesive tape (3) was obtained.

### [Example 4]

The acrylic copolymer (1) was obtained in the same manner as in Example 1.

15 Parts by weight of a maleic anhydride-modified propylene-butene copolymer resin (manufactured by Toyobo Co., Ltd., product name: "TOYO-TAC PMA-T," weight-average molecular weight: 75,000, melting point: 90°C) serving as a modified olefin resin and 2 parts by weight of an isocyanate-based cross-linking agent (manufactured by Tosoh Corporation, product name: "Coronate L") were added to 85 parts by weight of the acrylic copolymer (1), and the mixture was diluted with toluene to prepare a pressure-sensitive adhesive (4) having a solid content of 15%.

The resultant pressure-sensitive adhesive was applied onto a base material (polypropylene film, manufactured by Toray Industries, Inc., product name: "TORAYFAN," thickness: 12 µm) so that the thickness of a pressure-sensitive adhesive layer after drying became 5 µm. Thus, a pressure-sensitive adhesive tape (4) was obtained.

### [Example 5]

A pressure-sensitive adhesive tape (5) was produced in the same manner as in Example 4 except that: a polyester film having a thickness of 50 µm (manufactured by Toray Industries, Inc., product name: "LUMIRROR") was used as a base material; and the thickness of the pressure-sensitive adhesive layer was set to 20 µm.

### [Example 6]

A four-necked flask including a stirring blade, a temperature gauge, a nitrogen gas inlet tube, and a condenser was loaded with a mixture of 2-ethylhexyl acrylate and acrylic acid (90 parts by weight/10 parts by weight), 0.2 part by weight of benzoyl peroxide serving as an initiator, and 120 parts by weight of ethyl acetate, and a nitrogen gas was introduced into the flask while the contents were gently stirred. While the temperature of the liquid in the flask was kept at around 60°C, a polymerization reaction was performed for about 6 hours to provide an acrylic copolymer (2) having a weight-average molecular weight of 1,200,000.

15 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin and 2 parts by weight of an isocyanate-based cross-linking agent (manufactured by Tosoh Corporation, product name: "Coronate L") were added to 85 parts by weight of the acrylic copolymer (2), and the mixture was diluted with toluene to prepare a pressure-sensitive adhesive (5) having a solid content of 15%.

The resultant pressure-sensitive adhesive was applied onto a base material (polyimide film, manufactured by Toray Industries, Inc., product name: "Kapton 100H," thickness: 25 µm) so that the thickness of a pressure-sensitive adhesive layer after drying became 10 µm. Thus, a pressure-sensitive adhesive tape (6) was obtained.

### [Example 7]

A pressure-sensitive adhesive tape (7) was produced in the same manner as in Example 6 except that: a polyester film having a thickness of 50 µm (manufactured by Toray Industries, Inc., product name: "LUMIRROR") was used as a base material; and the thickness of the pressure-sensitive adhesive layer was set to 50 µm.

### [Example 8]

The acrylic copolymer (1) was obtained in the same manner as in Example 1.

25 Parts by weight of a maleic anhydride-modified propylene-butene copolymer resin (manufactured by Toyobo Co., Ltd., product name: "TOYO-TAC PMA-Lz," weight-average molecular weight: 100,000, melting point: 70°C) serving as a modified olefin resin and 2 parts by weight of an isocyanate-based cross-linking agent (manufactured by Tosoh Corporation, product name: "Coronate L") were added to 75 parts by weight of the acrylic copolymer (1), and the mixture was diluted with toluene to prepare a pressure-sensitive adhesive (6) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 10 µm. Thus, a pressure-sensitive adhesive tape (8) was obtained.

### [Example 9]

A four-necked flask including a stirring blade, a temperature gauge, a nitrogen gas inlet tube, and a condenser was loaded with a mixture of 2-ethylhexyl acrylate and acrylic acid (100 parts by weight/2 parts by weight), 0.2 part by weight of benzoyl peroxide serving as an initiator, and 230 parts by weight of ethyl acetate, and a nitrogen gas was introduced into the flask while the contents were gently stirred. While the temperature of the liquid in the flask was kept at around 60°C, a polymerization reaction was performed for about 6 hours to provide an acrylic copolymer (3) having a weight-average molecular weight of 650,000.

30 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin and 2 parts by weight of an isocyanate-based cross-linking agent (manufactured by Tosoh Corporation, product name: "Coronate L") were added to 70 parts by weight of the acrylic copolymer (3), and the mixture was diluted with toluene to prepare a pressure-sensitive adhesive (7) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 10 µm. Thus, a pressure-sensitive adhesive tape (9) was obtained.

### [Example 10]

A four-necked flask including a stirring blade, a temperature gauge, a nitrogen gas inlet tube, and a condenser was loaded with a mixture of n-butyl acrylate, ethyl acrylate, and acrylic acid (70 parts by weight/25 parts by weight/5 parts by weight), 0.2 part by weight of benzoyl peroxide serving as an initiator, and 120 parts by weight of ethyl acetate, and a nitrogen gas was introduced into the flask while the contents were gently stirred. While the temperature of the liquid in the flask was kept at around 60°C, a polymerization reaction was performed for about 6 hours to provide an acrylic copolymer (4) having a weight-average molecular weight of 700,000.

15 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin and 2 parts by weight of an isocyanate-based cross-linking agent (manufactured by Tosoh Corporation, product name: "Coronate L") were added to 85 parts by weight of the acrylic copolymer (4), and the mixture was diluted with toluene to prepare a pressure-sensitive adhesive (8) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 10 µm. Thus, a pressure-sensitive adhesive tape (10) was obtained.

### [Example 11]

A four-necked flask including a stirring blade, a temperature gauge, a nitrogen gas inlet tube, and a condenser was loaded with a mixture of n-butyl acrylate and acrylic acid (95 parts by weight/5 parts by weight), 0.2 part by weight of 2,2'-azobisisobutyronitrile serving as an initiator, and 233 parts by weight of ethyl acetate, and a nitrogen gas was introduced into the flask while the contents were gently stirred. While the temperature of the liquid in the flask was kept at around 60°C, a polymerization reaction was performed for about 6 hours to provide an acrylic copolymer (5) having a weight-average molecular weight of 700,000.

15 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin and 2 parts by weight of an isocyanate-based cross-linking agent (manufactured by Tosoh Corporation, product name: "Coronate L") were added to 85 parts by weight of the acrylic copolymer (5), and the mixture was diluted with toluene to prepare a pressure-sensitive adhesive (9) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 15 µm. Thus, a pressure-sensitive adhesive tape (11) was obtained.

### [Example 12]

The acrylic copolymer (2) was obtained in the same manner as in Example 6.

75 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin and 2 parts by weight of an isocyanate-based cross-linking agent (manufactured by Tosoh Corporation, product name: "Coronate L") were added to 25 parts by weight of the acrylic copolymer (2), and the mixture was diluted with toluene to prepare a pressure-sensitive adhesive (10) having a solid content of 15%.

The resultant pressure-sensitive adhesive was applied onto a base material (polypropylene film, manufactured by Toray Industries, Inc., product name: "TORAYFAN," thickness: 12 µm) so that the thickness of a pressure-sensitive adhesive layer after drying became 3 µm. Thus, a pressure-sensitive adhesive tape (12) was obtained.

### [Example 13]

The acrylic copolymer (1) was obtained in the same manner as in Example 1.

75 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin and 2 parts by weight of an isocyanate-based cross-linking agent (manufactured by Tosoh Corporation, product name: "Coronate L") were added to 25 parts by weight of the acrylic copolymer (1), and the mixture was diluted with toluene to prepare a pressure-sensitive adhesive (11) having a solid content of 15%.

The resultant pressure-sensitive adhesive was applied onto a base material (polyester film, manufactured by Toray Industries, Inc., product name: "LUMIRROR," thickness: 50 µm) so that the thickness of a pressure-sensitive adhesive layer after drying became 25 µm. Thus, a pressure-sensitive adhesive tape (13) was obtained.

### [Example 14]

The acrylic copolymer (1) was obtained in the same manner as in Example 1.

85 Parts by weight of a maleic anhydride-modified propylene-butene copolymer resin (manufactured by Toyobo Co., Ltd., product name: "TOYO-TAC PMA-T," weight-average molecular weight: 75,000, melting point: 90°C) serving as a modified olefin resin and 2 parts by weight of an isocyanate-based cross-linking agent (manufactured by Tosoh Corporation, product name: "Coronate L") were added to 15 parts by weight of the acrylic copolymer (1), and the mixture was diluted with toluene to prepare a pressure-sensitive adhesive (12) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 10 µm. Thus, a pressure-sensitive adhesive tape (14) was obtained.

### [Example 15]

The acrylic copolymer (1) was obtained in the same manner as in Example 1.

15 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin and 0.5 part by weight of an aluminum chelate-based cross-linking agent (product name: "ALUMINUM CHELATE A," manufactured by Kawaken Fine Chemicals Co., Ltd.) were added to 85 parts by weight of the acrylic copolymer (1), and the mixture was diluted with toluene to prepare a pressure-sensitive adhesive (13) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 20 µm. Thus, a pressure-sensitive adhesive tape (15) was obtained.

### [Example 16]

The acrylic copolymer (1) was obtained in the same manner as in Example 1.

85 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin and 0.2 part by weight of an aluminum chelate-based cross-linking agent (product name: "ALUMINUM CHELATE A," manufactured by Kawaken Fine Chemicals Co., Ltd.) were added to 15 parts by weight of the acrylic copolymer (1), and the mixture was diluted with toluene to prepare a pressure-sensitive adhesive (14) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 5 µm. Thus, a pressure-sensitive adhesive tape (16) was obtained.

### [Example 17]

The acrylic copolymer (1) was obtained in the same manner as in Example 1.

75 Parts by weight of a maleic anhydride-modified propylene-butene copolymer resin (manufactured by Toyobo Co., Ltd., product name: "TOYO-TAC PMA-T," weight-average molecular weight: 75,000, melting point: 90°C) serving as a modified olefin resin and 0.1 part by weight of an epoxy-based cross-linking agent (manufactured by Mitsubishi Gas Chemical Company, Inc., product name: "TETRAD-C") were added to 25 parts by weight of the acrylic copolymer (1), and the mixture was diluted with toluene to prepare a pressure-sensitive adhesive (15) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 5 µm. Thus, a pressure-sensitive adhesive tape (17) was obtained.

### [Comparative Example 1]

The acrylic copolymer (1) was obtained in the same manner as in Example 1.

18 Parts by weight of a modified rosin resin (manufactured by Harima Chemicals, Inc., product name: "HARIESTER KT-3") and 2 parts by weight of an isocyanate-based cross-linking agent (manufactured by Tosoh Corporation, product name: "Coronate L") were added to 100 parts by weight of the acrylic copolymer (1), and the mixture was diluted with toluene to prepare a pressure-sensitive adhesive (C1) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 10 µm. Thus, a pressure-sensitive adhesive tape (C1) was obtained.

### [Comparative Example 2]

The acrylic copolymer (1) was obtained in the same manner as in Example 1.

0.5 Part by weight of an epoxy-based cross-linking agent (manufactured by Mitsubishi Gas Chemical Company, Inc., product name: "TETRAD-C") was added to 100 parts by weight of the acrylic copolymer (1), and the mixture was diluted with toluene to prepare a pressure-sensitive adhesive (C2) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 10 µm. Thus, a pressure-sensitive adhesive tape (C2) was obtained.

### [Comparative Example 3]

The acrylic copolymer (5) was obtained in the same manner as in Example 11.

30 Parts by weight of a terpene phenol resin (manufactured by Yasuhara Chemical Co., Ltd., product name: "YS POLYSTER S-145," softening point: about 145°C), 2 parts by weight of an isocyanate-based cross-linking agent (manufactured by Tosoh Corporation, product name: "Coronate L"), and 0.03 part by weight of an epoxy-based cross-linking agent (manufactured by Mitsubishi Gas Chemical Company, Inc., product name: "TETRAD-C") were added to 100 parts by weight of the acrylic copolymer (5), and the mixture was diluted with toluene to prepare a pressure-sensitive adhesive (C3) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 10 µm. Thus, a pressure-sensitive adhesive tape (C3) was obtained.

### [Comparative Example 4]

A four-necked flask including a stirring blade, a temperature gauge, a nitrogen gas inlet tube, and a condenser was loaded with a mixture of 2-ethylhexyl acrylate and 2-hydroxyethyl acrylate (100 parts by weight/4 parts by weight), 0.2 part by weight of 2,2'-azobisisobutyronitrile serving as an initiator, and 233 parts by weight of ethyl acetate, and a nitrogen gas was introduced into the flask while the contents were gently stirred. While the temperature of the liquid in the flask was kept at around 60°C, a polymerization reaction was performed for about 6 hours to provide an acrylic copolymer (6) having a weight-average molecular weight of 550,000.

15 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin and 2 parts by weight of an isocyanate-based cross-linking agent (manufactured by Tosoh Corporation, product name: "Coronate L") were added to 85 parts by weight of the acrylic copolymer (6), and the mixture was diluted with toluene to prepare a pressure-sensitive adhesive (C4) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 10 µm. Thus, a pressure-sensitive adhesive tape (C4) was obtained.

### [Comparative Example 5]

The acrylic copolymer (6) was obtained in the same manner as in Comparative Example 4.

75 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin and 2 parts by weight of an isocyanate-based cross-linking agent (manufactured by Tosoh Corporation, product name: "Coronate L") were added to 25 parts by weight of the acrylic copolymer (6), and the mixture was diluted with toluene to prepare a pressure-sensitive adhesive (C5) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 10 µm. Thus, a pressure-sensitive adhesive tape (C5) was obtained.

### [Comparative Example 6]

100 Parts by weight of a maleic anhydride-modified propylene-butene copolymer resin (manufactured by Toyobo Co., Ltd., product name: "TOYO-TAC PMA-L," weight-average molecular weight: 75,000, melting point: 70°C) serving as a modified olefin resin was dissolved in toluene to prepare a pressure-sensitive adhesive (C6) having a solid content of 15%.

The resultant pressure-sensitive adhesive was applied onto a base material (polypropylene film, manufactured by Toray Industries, Inc., product name: "TORAYFAN," thickness: 30 µm) so that the thickness of a pressure-sensitive adhesive layer after drying became 10 µm. Thus, a pressure-sensitive adhesive tape (C6) was obtained.

### <Evaluation>

The resultant single-sided pressure-sensitive adhesive tapes were subjected to the following evaluations. The results are shown in Table 1 and Table 2.

### (1) Pressure-sensitive Adhesive Strength (to Aluminum Plate)

Each of the pressure-sensitive adhesive tapes obtained in Examples and Comparative Examples was bonded to the surface of an aluminum plate under the following conditions to provide a test body. The pressure-sensitive adhesive tapes of Example 12, Example 13, Example 14, Example 16, Example 17, Comparative Example 5, and Comparative Example 6 were heat-bonding pressure-sensitive adhesive tapes, and were hence pressure-bonded only at warm temperature (130°C). The other pressure-sensitive adhesive tapes were pressure-bonded at each of normal temperature (25°C) and warm temperature (130°C).

In the resultant test body, a strength (N/10 mm) required at the time of the peeling of the pressure-sensitive adhesive tape from the surface of the aluminum plate was measured with a precision universal tester (product name: "AUTOGRAPH AG-I," manufactured by Shimadzu Corporation) under the following conditions, and was adopted as the pressure-sensitive adhesive strength of the pressure-sensitive adhesive tape.

### (Pressure Bonding Conditions)

Pressure bonding at normal temperature: Pressure bonding is performed by one pass back and forth with a 2 kg roller.

Pressure bonding at warm temperature: Pressure bonding is performed at 0.4 MPa for 5 minutes under such a setting that the surface temperature of a bonding apparatus becomes 130°C.

### (Peeling Conditions)

Temperature: Normal temperature (25°C)
Peel rate: 300 mm/min
Peel angle: 180°

### (2) Pressure-sensitive Adhesive Strength (to Polypropylene Plate)

The pressure-sensitive adhesive strengths of the pressure-sensitive adhesive tapes were measured in the same manner as in the evaluation (1) except that the aluminum plate was changed to a polypropylene plate.

### (3) Oil Resistance

Test bodies were obtained in the same manner as in the evaluations (1) and (2).

Each of the resultant test bodies was immersed in oleic acid at 60°C for 72 hours, and the presence or absence of the floating and peeling of its pressure-sensitive adhesive tape was visually observed. Further, oleic acid was wiped off the test body whose pressure-sensitive adhesive tape had not peeled, and then the test body was left at rest under an environment at 23°C and 50%RH for 30 minutes. After that, the pressure-sensitive adhesive strength (pressure-sensitive adhesive strength after the oleic acid immersion) of the pressure-sensitive adhesive tape was measured by the same method as that of the evaluation (1). Oleic acid was adopted as pseudo sebum.

### (4) Alcohol Resistance

Test bodies were obtained in the same manner as in the evaluations (1) and (2).

Each of the resultant test bodies was immersed in ethanol at 60°C, which had been diluted to 75 wt% with distilled water, for 72 hours, and the presence or absence of the floating and peeling of its pressure-sensitive adhesive tape was visually observed. Further, ethanol was wiped off the test body whose pressure-sensitive adhesive tape had not peeled, and then the test body was left at rest under an environment at 23°C and 50%RH for 30 minutes. After that, the pressure-sensitive adhesive strength (pressure-sensitive adhesive strength after the ethanol immersion) of the pressure-sensitive adhesive tape was measured by the same method as that of the evaluation (1). Ethanol was adopted as a pseudo alcohol for disinfection.

### (5) Haze Value

The haze value of each of the pressure-sensitive adhesive tapes was measured with a haze meter (model number: HM-150, manufactured by Murakami Color Research Laboratory Co., Ltd.) by causing incident light to enter from its pressure-sensitive adhesive layer surface side.

### (6) Holding Strength Test

Each of the pressure-sensitive adhesive tapes obtained in Examples and Comparative Examples was bonded to a SUS304BA plate under the following conditions to provide a test body (pressure bonding area: 10 mm×20 mm). The pressure-sensitive adhesive tapes of Example 12, Example 13, Example 14, Example 16, Example 17, Comparative Example 5, and Comparative Example 6 were heat-bonding pressure-sensitive adhesive tapes, and were hence pressure-bonded at warm temperature (130°C). The other pressure-sensitive adhesive tapes were pressure-bonded at each of normal temperature (25°C) and warm temperature (130°C). In addition, with regard to the pressure-sensitive adhesive tapes using the polypropylene films as their base materials, the test bodies were produced by backing the tapes with a PET pressure-sensitive adhesive tape (manufactured by Nitto Denko Corporation, product name: "No. 315").

### (Pressure Bonding Conditions)

Pressure bonding at normal temperature: Pressure bonding is performed by one pass back and forth with a 2 kg roller.

Pressure bonding at warm temperature: Pressure bonding is performed at 0.4 MPa for 5 minutes under such a setting that the surface temperature of a bonding apparatus becomes 130°C.

Each of the test bodies produced as described above was raised in a vertical direction, and a load of 500 g was applied to the test body under an ambient temperature of 130°C in a downward direction, followed by the evaluation of its holding strength from the shift amount of its pressure-sensitive adhesive tape 1 hour after the application. The shift amount is shown in Table 1.

**Table 1**

| | | | Exam ple 1 | Exam ple 2 | Exam ple 3 | Exam ple 4 | Exam ple 5 | Exam ple 6 | Exam ple 7 | Exam ple 8 | Exam ple 9 | Exam ple 10 | Exam ple 11 | Exam ple 12 | Exam ple 13 | Exam ple 14 | Exam ple 15 | Exam ple 16 | Exam ple 17 |
|---|---|---|---|---|---|---|---|---|---|---|---|---|---|---|---|---|---|---|---|
| Comp osit ion of pres sure sens itiv e adhe sive [par t(s) by weig ht] | Acryli c copoly mer | (1) 2EHA/AA=95/5 (Mw: 1,300,000) | 75 | 75 | 75 | 85 | 85 | | | 75 | | | | | 25 | 15 | 85 | **15** | 25 |
| | | (2) 2EHA/AA=90/10 (Mw: 1,200,000) | | | | | | 85 | 85 | | | | | 25 | | | | | |
| | | (3) 2EHA/AA=100/2 (Mw: 650,000) | | | | | | | | | 70 | | | | | | | | |
| | | (4) BA/EA/AA=70/25/5 (Mw: 700,000) | | | | | | | | | | 85 | | | | | | | |
| | | (5) BA/AA=95/5 (Mw: 700,000) | | | | | | | | | | | 85 | | | | | | |
| | | (6) 2EHA/HEA=100/4 (Mw: 550,000) | | | | | | | | | | | | | | | | | |
| | Olefin resin | PMA-L (melting point: 70°C) | 25 | 25 | | | | 15 | 15 | | 30 | 15 | 15 | 75 | 75 | | 15 | 85 | |
| | | PMA-LZ (melting point: 70°C) | | | | | | | | 25 | | | | | | | | | |
| | | PMA-T (melting point: 90°C) | | | 25 | 15 | 15 | | | | | | | | | 85 | | | 75 |
| | Cross-linkin g agent | Polyisocyanate | 2 | 2 | 2 | 2 | 2 | 2 | 2 | 2 | 2 | 2 | 2 | 2 | 2 | 2 | | | |
| | | Epoxy | | | | | | | | | | | | | | | | | 0.1 |
| | | Aluminum chelate | | | | | | | | | | | | | | | 0.5 | 0.2 | |
| | Tackif ier | HARIESTER KT-3 (softening point: 180°C) | | | | | | | | | | | | | | | | | |
| | | YS POLYSTER S-145 (softening point: 145°C) | | | | | | | | | | | | | | | | | |
| | | ARKON P-125 (softening point: 125°C) | | 30 | | | | | | | | | | | | | | | |
| Thickness of pressure-sensitive adhesive layer [µm] | | | 10 | 10 | 20 | 5 | 20 | 10 | 50 | 10 | 10 | 10 | 15 | 3 | 25 | 10 | 20 | 5 | 5 |
| Base material | | | PP | PP | PP | PP | PET | PI | PET | PP | PP | PP | PP | PP | PET | PP | PP | PP | PP |
| Thickness of base material [µm] | | | 30 | 30 | 12 | 12 | 50 | 25 | 50 | 30 | 30 | 30 | 30 | 12 | 50 | 30 | 30 | 30 | 30 |
| Eval uati on | Pressu resensit ive adhesi | To aluminum plate (pressure bonding at normal temperature) | 1.00 | 1.70 | 1.30 | 2.53 | 3.67 | 2.73 | 7.07 | 1.27 | 2.07 | 2.07 | 0.87 | | | | 1.77 | | |
| | | To PP plate (pressure bonding at | 0.73 | 1.93 | 0.52 | 0.88 | 0.95 | 1.20 | 0.90 | 0.63 | 1.37 | 1.12 | 0.30 | | | | 1.00 | | |
| | ve streng th [N/10 mm] | normal temperature) | | | | | | | | | | | | | | | | | |
| | | To aluminum plate (pressure bonding at warm temperature) | 3.60 | 3.27 | 5.93 | 3.07 | 8.00 | 3.63 | 11.3 | 2.73 | 2.40 | 3.13 | 6.45 | 1.53 | 10.6 | 7.10 | 4.83 | 2.11 | 1.87 |
| | | To PP plate (pressure bonding at warm temperature) | 5.15 | 3.53 | 5.62 | 2.33 | 8.87 | 2.19 | 5.70 | 2.17 | 4.17 | 1.95 | 6.47 | 3.46 | 19.6 | 3.37 | 3.33 | 2.87 | 3.2 |
| | Haze [%] | | 4.5 | 7.9 | 6.8 | 3.4 | 13.2 | 7.2 | 12.3 | 8.5 | 9.9 | 4.9 | 9.8 | 2.6 | 7.3 | 16.3 | 2.90 | 6.10 | 8.2 |
| | Holding strength [mm] | | 0.1 | 0.1 | 0.2 | 0.1 | 0.2 | 0.1 | 0.1 | 0.1 | 0.3 | 0.2 | 0.2 | 0.2 | 0.3 | 0.8 | 0.10 | 1.20 | 0.7 |
| | Oil resist ance (oleic acid) [N/10 mm] | To aluminum plate (pressure bonding at normal temperature) | 1.29 | 0.20 | 0.12 | 0.10 | 0.15 | 0.73 | 1.33 | 0.10 | 0.15 | 0.10 | 0.45 | | | | 0.11 | | |
| | | To PP plate (pressure bonding at normal temperature) | 0.35 | 0.20 | 0.13 | 0.13 | 0.13 | 0.68 | 0.20 | 0.10 | 0.10 | 0.10 | 0.90 | | | | 0.10 | | |
| | | To aluminum plate (pressure bonding at warm temperature) | 1.80 | 0.23 | 0.55 | 0.13 | 1.13 | 1.10 | 2.37 | 0.17 | 0.20 | 0.15 | 0.63 | 1.10 | 1.87 | 1.30 | 0.14 | 0.65 | 0.72 |
| | | To PP plate (pressure bonding at warm temperature) | 0.60 | 0.27 | 1.43 | 0.17 | 1.23 | 0.80 | 0.38 | 0.15 | 0.13 | 0.15 | 1.27 | 1.57 | 0.75 | 1. 93 | 0.12 | 1.36 | 1.28 |
| | Alcoho 1 resist ance (ethan ol) [N/10 mm] | To aluminum plate (pressure bonding at normal temperature) | 0.32 | 0.87 | 1.23 | 0.60 | 0.90 | 1.83 | 1.70 | 0.83 | 0.63 | 0.12 | 0.63 | | | | 3.10 | | |
| | | To PP plate (pressure bonding at normal temperature) | 1.45 | 0.83 | 0.63 | 1.03 | 0.67 | 1.20 | 0.85 | 0.63 | 1.15 | 0.15 | 0.60 | | | | 3.13 | | |
| | | To aluminum plate (pressure bonding at warm temperature) | 0.53 | 2.10 | 3.27 | 1.30 | 6.53 | 2.53 | 4.63 | 1.77 | 0.95 | 0.20 | 0.80 | 1.00 | 0.76 | 2.40 | 3.13 | 1.97 | 1.72 |
| | | To PP plate (pressure bonding at warm temperature) | 1.70 | 1.90 | 3.30 | 2.13 | 6.27 | 2.40 | 2.89 | 1.63 | 1.56 | 0.25 | 0.77 | 1.80 | 1.98 | 1.53 | 3.33 | 2.17 | 2.53 |

**Table 2**

| | | | Comparative Example 1 | Comparative Example 2 | Comparative Example 3 | Comparative Example 4 | Comparative Example 5 | Comparative Example 6 |
|---|---|---|---|---|---|---|---|---|
| Compositio n of pressure-sensitive adhesive [part(s) by weight] | Acrylic copolymer | (1) 2EHA/AA=95/5 (Mw: 1,300,000) | 100 | 100 | | | | |
| | | (2) 2EHA/AA=90/10 (Mw: 1,200,000) | | | | | | |
| | | (3) 2EHA/AA=100/2 (Mw: 650,000) | | | | | | |
| | | (4) BA/EA/AA=70/25/5 (Mw: 700,000) | | | | | | |
| | | (5) BA/AA=95/5 (Mw: 700,000) | | | 100 | | | |
| | | (6) 2EHA/HEA=100/4 (Mw: 550,000) | | | | 85 | 25 | |
| | Olefin resin | PMA-L (melting point: 70°C) | | | | 15 | 75 | 100 |
| | | PMA-LZ (melting point: 70°C) | | | | | | |
| | | PMA-T (melting point: 90°C) | | | | | | |
| | Crosslinking agent | Polyisocyanate | 2 | | 2 | 2 | 2 | |
| | | Epoxy | | 0.5 | 0.03 | | | |
| | | Aluminum chelate | | | | | | |
| | Tackifier | HARIESTER KT-3 (softening point: 180°C) | 18 | | | | | |
| | | YS POLYSTER S-145 (softening point: 145°C) | | | 30 | | | |
| | | ARKON P-125 (softening point: 125°C) | | | | | | |
| Thickness of pressure-sensitive adhesive layer [µm] | | | 10 | 10 | 10 | 10 | 10 | 10 |
| Base material | | | PP | PP | PP | PP | PP | PP |
| Thickness of base material [µm] | | | 30 | 30 | 30 | 30 | 30 | 30 |
| Evaluation | Pressure-sensitive adhesive strength [N/10 mm] | To aluminum plate (pressure bonding at normal temperature) | 2.87 | 0.87 | 4.03 | 0.13 | | |
| | | To PP plate (pressure bonding at normal temperature) | 1.53 | 0.75 | 0.12 | 0.10 | | |
| | | To aluminum plate (pressure bonding at warm temperature) | 3.43 | 0.90 | 5.73 | 0.60 | 0.30 | 5.51 |
| | | To PP plate (pressure bonding at warm temperature) | 2.60 | 0.80 | 1.75 | 0.20 | 0.10 | 1.75 |
| | Haze [%] | | 4.2 | 2.5 | 4.7 | 19.4 | 10.5 | 6.5 |
| | Holding strength [mm] | | 0.3 | 0.1 | 0.4 | 0.1 | 0.4 | Falling |
| | Oil resistance (oleic acid) [N/10 mm] | To aluminum plate (pressure bonding at normal temperature) | 0.75 | × Peeling | 0.06 | × Peeling | | |
| | | To PP plate (pressure bonding at normal temperature) | × Peeling | × Peeling | × Peeling | × Peeling | | |
| | | To aluminum plate (pressure bonding at warm temperature) | 0.90 | × Peeling | 0.10 | × Peeling | × Peeling | 4.80 |
| | | To PP plate (pressure bonding at warm temperature) | × Peeling | × Peeling | × Peeling | × Peeling | × Peeling | 1.55 |
| | Alcohol resistance (ethanol) [N/10 mm] | To aluminum plate (pressure bonding at normal temperature) | × Peeling | × Peeling | 0.05 | × Peeling | | |
| | | To PP plate (pressure bonding at normal temperature) | 1.21 | × Peeling | × Peeling | 0. 05 | | |
| | | To aluminum plate (pressure bonding at warm temperature) | × Peeling | × Peeling | 0.20 | × Peeling | × Peeling | 0.90 |
| | | To PP plate (pressure bonding at warm temperature) | 1.57 | × Peeling | × Peeling | 0.05 | × Peeling | 1.30 |

### <<Double-sided Pressure-sensitive Adhesive Tape>>

### [Example 18]

The pressure-sensitive adhesive (1) was obtained in the same manner as in Example 1.

The resultant pressure-sensitive adhesive was applied onto a release film (silicone-treated release film, manufactured by Toray Industries, Inc., product name: "Cerapeel," thickness: 38 µm) so that the thickness of a pressure-sensitive adhesive layer after drying became 10 µm.

The pressure-sensitive adhesive layer with the release film obtained as described above was bonded to each of both the surfaces of a base material (polyester film, manufactured by Toray Industries, Inc., product name: "LUMIRROR," thickness: 38 µm). Thus, a double-sided pressure-sensitive adhesive tape (18) was obtained.

### [Example 19]

The pressure-sensitive adhesive (11) was obtained in the same manner as in Example 13.

The resultant pressure-sensitive adhesive (11) was applied to one surface of a base material (polyimide film, manufactured by Du Pont-Toray Co., Ltd., product name: "Kapton 100H," thickness: 25 µm) so that the thickness of a pressure-sensitive adhesive layer after drying became 5 µm.

Next, the pressure-sensitive adhesive (1) was obtained in the same manner as in Example 1.

The resultant pressure-sensitive adhesive (1) was applied onto a release film (silicone-treated release film, manufactured by Toray Industries, Inc., product name: "Cerapeel," thickness: 38 µm) so that the thickness of a pressure-sensitive adhesive layer after drying became 10 µm.

The pressure-sensitive adhesive layer with the release film obtained as described above was bonded to the other surface of the base material. Thus, a double-sided pressure-sensitive adhesive tape (19) was obtained.

### [Example 20]

The pressure-sensitive adhesive (14) was obtained in the same manner as in Example 16.

The resultant pressure-sensitive adhesive (14) was applied to one surface of a base material (polypropylene film, manufactured by Toray Industries, Inc., product name: "TORAYFAN," thickness: 30 µm) so that the thickness of a pressure-sensitive adhesive layer after drying became 5 µm.

Next, the pressure-sensitive adhesive (1) was obtained in the same manner as in Example 1.

The resultant pressure-sensitive adhesive (1) was applied onto a release film (silicone-treated release film, manufactured by Toray Industries, Inc., product name: "Cerapeel," thickness: 38 µm) so that the thickness of a pressure-sensitive adhesive layer after drying became 10 µm.

The pressure-sensitive adhesive layer with the release film obtained as described above was bonded to the other surface of the base material. Thus, a double-sided pressure-sensitive adhesive tape (20) was obtained.

### [Comparative Example 7]

The pressure-sensitive adhesive (15) was obtained in the same manner as in Comparative Example 1.

The resultant pressure-sensitive adhesive was applied onto a release film (silicone-treated release film, manufactured by Toray Industries, Inc., product name: "Cerapeel," thickness: 38 µm) so that the thickness of a pressure-sensitive adhesive layer after drying became 10 µm.

The pressure-sensitive adhesive layer with the release film obtained as described above was bonded to each of both the surfaces of a base material (polyester film, manufactured by Toray Industries, Inc., product name: "LUMIRROR," thickness: 38 µm). Thus, a double-sided pressure-sensitive adhesive tape (C7) was obtained.

### <Evaluation>

The resultant double-sided pressure-sensitive adhesive tapes were subjected to the following evaluations. The results are shown in Table 3.

### (7) Oil Resistance Evaluation

A polypropylene plate was arranged on one surface of each of the double-sided pressure-sensitive adhesive tapes, and an aluminum plate was arranged on the other surface thereof, followed by pressure bonding at 0.4 MPa for 5 minutes under such a setting that the surface temperature of a bonding apparatus became 130°C. Thus, a test piece was produced. In each of the double-sided pressure-sensitive adhesive tapes of Examples 19 and 20, the polypropylene plate was arranged on the pressure-sensitive adhesive layer side formed from the pressure-sensitive adhesive (11) or (14).

Each of the resultant test pieces was immersed in oleic acid at 60°C for 72 hours, and the presence or absence of the floating and peeling of its pressure-sensitive adhesive tape was visually observed.

### (8) Alcohol Resistance Evaluation

Test pieces were produced in the same manner as in the evaluation (7).

Each of the resultant test pieces was immersed in ethanol at 60°C, which had been diluted to 75 wt% with distilled water, for 72 hours, and the presence or absence of the floating and peeling of its pressure-sensitive adhesive tape was visually observed.

**Table 3**

| | | Example 18 | | Example 19 | | Example 20 | | Comparative Example 7 | |
|---|---|---|---|---|---|---|---|---|---|
| | | Pressure-sensitive adhesive layer 1 | Pressure-sensitive adhesive layer 2 | Pressure-sensitive adhesive layer 1 | Pressure-sensitive adhesive layer 2 | Pressure-sensitive adhesive layer 1 | Pressure-sensitive adhesive layer 2 | Pressure-sensitive adhesive layer 1 | Pressure-sensitive adhesive layer 2 |
| Acrylic copolymer | (1) 2EHA/AA=95/5 (Mw: 1,300,000) | 75 | 75 | 25 | 75 | 15 | 75 | 100 | 100 |
| Olefin resin | PMA-L (melting point: 70°C) | 25 | 25 | 75 | 25 | 85 | 25 | | |
| Crosslinking agent | Polyisocyanate | 2 | 2 | 2 | 2 | | 2 | 2 | 2 |
| | Aluminum chelate | | | | | 0.2 | | | |
| Base material | | PET 38 µm | | PI 25 µm | | PP 30 µm | | PET 38 µm | |
| Thickness of pressure-sensitive adhesive layer [µm] | | 10 | 10 | 5 | 10 | 5 | 10 | 10 | 10 |
| Oil resistance (oleic acid) | | No floating or peeling | | No floating or peeling | | No floating or peeling | | Peeling | |
| Alcohol resistance (ethanol) | | No floating or peeling | | No floating or peeling | | No floating or peeling | | Peeling | |

### Reference Signs List

- 10: base material

- 20: pressure-sensitive adhesive layer
- 100: pressure-sensitive adhesive tape

## Claims

1. A pressure-sensitive adhesive configured to express an adhesive property by being pressure-bonded, comprising:
an acrylic polymer having an acid functional group; and
a crystalline resin having a melting point of 25°C or more,
wherein the acrylic polymer having an acid functional group has a constituent unit "a" derived from a (meth)acrylic acid alkyl ester having a linear or branched alkyl group having 4 or more carbon atoms,
wherein the crystalline resin is a polyolefin-based resin,
wherein the polyolefin-based resin is a maleic anhydride-modified polyolefin-based resin, a maleic acid-modified polyolefin-based resin, or an acrylic-modified polyolefin-based resin, and
wherein the melting point is measured by differential scanning calorimetry (DSC) as defined in the description.

2. The pressure-sensitive adhesive according to claim 1, wherein the pressure-sensitive adhesive is configured to express the adhesive property by being warmed.

3. The pressure-sensitive adhesive according to claim 1 or 2, wherein a content ratio of the constituent unit "a" is 50 parts by weight or more with respect to 100 parts by weight of the acrylic polymer having an acid functional group.

4. The pressure-sensitive adhesive according to any one of claims 1 to 3, further comprising a C5-based petroleum resin and/or a C9-based petroleum resin.

5. A pressure-sensitive adhesive tape, comprising the pressure-sensitive adhesive of any one of claims 1 to 4.

6. The pressure-sensitive adhesive tape according to claim 5, comprising:
a base material; and
a pressure-sensitive adhesive layer arranged on at least one side of the base material,
wherein the pressure-sensitive adhesive layer contains the pressure-sensitive adhesive of any one of claims 1 to 4.

7. The pressure-sensitive adhesive tape according to claim 6, wherein the base material is formed from at least one kind selected from polyacrylate, polyurethane, polyimide, aramid, polyamide, an ethylene-vinyl alcohol copolymer, polyetherimide, polyvinylidene fluoride, polyester, polypropylene, polyethylene, and polyphenylene sulfide.

8. The pressure-sensitive adhesive tape according to claim 6 or 7, further comprising a peeling film arranged on a side of the pressure-sensitive adhesive layer opposite to the base material.

## Patentansprüche

1. Druckempfindliches Haftmittel, das so konfiguriert ist, dass es eine haftende Eigenschaft durch Druckverbinden zeigt, umfassend:
ein Acrylpolymer mit einer säurefunktionellen Gruppe; und
ein kristallines Harz mit einem Schmelzpunkt von 25°C oder mehr,
wobei das Acrylpolymer mit einer säurefunktionellen Gruppe eine Struktureinheit "a" aufweist, die von einem (Meth)acrylsäurealkylester mit einer linearen oder verzweigten Alkylgruppe, die 4 oder mehr Kohlenstoffatome aufweist, abgeleitet ist,
wobei das kristalline Harz ein Polyolefin-basiertes Harz ist,
wobei das Polyolefin-basierte Harz ein Maleinsäureanhydridmodifiziertes Polyolefin-basiertes Harz, ein Maleinsäure-modifiziertes Polyolefin-basiertes Harz, oder ein Acryl-modifiziertes Polyolefin-basiertes Harz ist, und
wobei der Schmelzpunkt durch dynamische Differenzkalorimetrie (DDK), wie in der Beschreibung definiert, gemessen ist.

2. Druckempfindliches Haftmittel nach Anspruch 1, wobei das druckempfindliche Haftmittel so konfiguriert ist, dass es die haftende Eigenschaft durch Erwärmen zeigt.

3. Druckempfindliches Haftmittel nach Anspruch 1 oder 2, wobei ein Gehaltsanteil der Struktureinheit "a" 50 Gewichtsteile oder mehr in Bezug auf 100 Gewichtsteile des Acrylpolymers mit einer säurefunktionellen Gruppe beträgt.

4. Druckempfindliches Haftmittel nach einem der Ansprüche 1 bis 3, weiter umfassend ein C5-basiertes Petroleumharz und/oder ein C9-basiertes Petroleumharz.

5. Druckempfindliches Haftband, welches das druckempfindliche Haftmittel nach einem der Ansprüche 1 bis 4 umfasst.

6. Druckempfindliches Haftband nach Anspruch 5, umfassend:
ein Basismaterial; und
eine druckempfindliche Haftschicht, die auf mindestens einer Seite des Basismaterials angeordnet ist,
wobei die druckempfindliche Haftschicht das druckempfindliche Haftmittel nach einem der Ansprüche 1 bis 4 enthält.

7. Druckempfindliches Haftband nach Anspruch 6, wobei das Basismaterial aus mindestens einer Art, ausgewählt aus Polyacrylat, Polyurethan, Polyimid, Aramid, Polyamid, einem EthylenVinylalkohol-Copolymer, Polyetherimid, Polyvinylidenfluorid, Polyester, Polypropylen, Polyethylen und Polyphenylensulfid, gebildet ist.

8. Druckempfindliches Haftband nach Anspruch 6 oder 7, weiter umfassend eine Abziehfolie, die auf einer Seite der druckempfindlichen Haftschicht gegenüber dem Basismaterial angeordnet ist.

## Revendications

1. Adhésif sensible à la pression configuré pour exprimer une propriété adhésive en étant lié par pression, comprenant :
un polymère acrylique ayant un groupe fonctionnel de type acide ; et
une résine cristalline ayant un point de fusion de 25 °C ou plus,
dans lequel le polymère acrylique ayant un groupe fonctionnel de type acide a un motif constitutif « a » dérivé d'un ester alkylique d'acide (méth)acrylique ayant un groupe alkyle linéaire ou ramifié ayant 4 atomes de carbone ou plus,
dans lequel la résine cristalline est une résine à base de polyoléfine,
dans lequel la résine à base de polyoléfine est une résine à base de polyoléfine modifiée par l'anhydride maléique, une résine à base de polyoléfine modifiée par l'acide maléique ou une résine à base de polyoléfine modifiée par acrylique, et
dans lequel le point de fusion est mesuré par calorimétrie différentielle à balayage (DSC) telle que définie dans la description.

2. Adhésif sensible à la pression selon la revendication 1, dans lequel l'adhésif sensible à la pression est configuré pour exprimer la propriété adhésive en étant chauffé.

3. Adhésif sensible à la pression selon la revendication 1 ou 2, dans lequel un rapport de teneur du motif constitutif « a » est de 50 parties en poids ou plus pour 100 parties en poids du polymère acrylique ayant un groupe fonctionnel de type acide.

4. Adhésif sensible à la pression selon l'une quelconque des revendications 1 à 3, comprenant en outre une résine de pétrole à base de C5 et/ou une résine de pétrole à base de C9.

5. Ruban adhésif sensible à la pression, comprenant l'adhésif sensible à la pression selon l'une quelconque des revendications 1 à 4.

6. Ruban adhésif sensible à la pression selon la revendication 5, comprenant :
un matériau de base ; et
une couche d'adhésif sensible à la pression disposée sur au moins une face du matériau de base,
dans lequel la couche d'adhésif sensible à la pression contient l'adhésif sensible à la pression selon l'une quelconque des revendications 1 à 4.

7. Ruban adhésif sensible à la pression selon la revendication 6, dans lequel le matériau de base est formé à partir d'au moins une sorte choisie parmi un polyacrylate, un polyuréthane, un polyimide, un aramide, un polyamide, un copolymère éthylène-alcool vinylique, un polyétherimide, un poly(fluorure de vinylidène), un polyester, un polypropylène, un polyéthylène et un poly(sulfure de phénylène).

8. Ruban adhésif sensible à la pression selon la revendication 6 ou 7, comprenant en outre un film pelable disposé sur une face de la couche d'adhésif sensible à la pression opposée au matériau de base.
